# EUROPEAN PATENT SPECIFICATION

(11) **EP 2 175 388 B1**
(45) Date of publication and mention of the grant of the patent: **13.05.2015**
(21) Application number: 07845795.9
(22) Date of filing: 03.12.2007
(51) Int. Cl.: G05B 9/02

(54) **INTELLIGENT PROTECTION SYSTEM FOR DYNAMO GROUP THERMAL CONTROL**
INTELLIGENTES SCHUTZSYSTEM ZUR THERMISCHEN KONTROLLE VON DYNAMOGRUPPEN
SYSTÈME DE PROTECTION INTELLIGENT POUR RÉGULATION THERMIQUE DE GROUPE DE DYNAMOS

(30) Priority: 11.06.2007 CN 200710041838
(43) Date of publication of application: 14.04.2010
(73) Proprietor: Shanghai Waigaoqiao No.3 Power Generation Co.Ltd, Shanghai 200137 (CN)
(72) Inventor: FENG, Weizhong, Shanghai 200434 (CN)
(74) Representative: Kailuweit & Uhlemann Patentanwälte Partnerschaft mbB
(86) International application number: PCT/CN2007/003433
(87) International publication number: WO 2008/151486

(56) References cited:
- EP-A2- 1 752 898
- CN-A- 1 528 045
- CN-A- 1 913 274
- US-A1- 2005 055 609
- US-A1- 2007 038 335
- US-B1- 6 892 163

## Description

### Field of the Invention

The present invention relates to the field of thermal control of a power plant, and more particularly, to a thermal control intelligent protection system employed in a large-sized generating unit.

### Background of the invention

Once an accident occurs in a large-sized generating unit, it will not only affect the regular production of the electric energy, causing a great loss to the power grids, but also damage the equipments in a power plant. A thermal control protection system, which is designed to protect the unit equipments from serious damage, mainly includes a furnace safety monitoring system, a turbine emergency trip system, a sequential tripping system and a interlock protection system for a auxiliary machine and a bypass system.

The thermal control protection system in early times adopted a control mode with separately arranged instruments, which was **characterized in that** various components of the control system are relatively dispersed, the control circuits are independent to each other and the processing speed of the control system is slow. With the continuous improvement in the production scale and complexity of the power plants, such kind of control mode has been gradually abandoned because it failed to guarantee a safe, stable, economical and coordinated operation of the whole production process.

With the development of computer and communication technologies, subsequently the thermal control protection is realized by being gradually incorporated into the Distributed Control System (DCS). **Up** to now the development of DCS has experienced four generations: as for the first and second generations of the DCS systems, the processing speed of a CPU is relatively slow, the memory capacity is small, the system information content is insufficient, and the specific logical quantity of a protection system has direct influence on the processing speed of the CPU, which in turn has influence on the correctness and real-time response of a protection action; as for the third and fourth generations of the DCS systems, the processing speed of the CPU is higher, the memory capacity is adequate, the system information is comprehensive, accurate and real-time, and the specific logical quantity of the protection system has little influence on its performance.

Nevertheless, for the thermal control protection system, regardless of the implementations in a control mode with separately arranged instruments in early times or the control mode of DCS realization at present, the design of a protection principle remains unchanged: according to an individual signal of a measuring point, simple logical operations are adopted to generate a protection instruction.

US 6892163 B1 shows a method of detecting maloperations and refuse-operations of the protection.

However, a deep consideration and a further treatment have not been made for maloperations and refuse-operations of the protection.

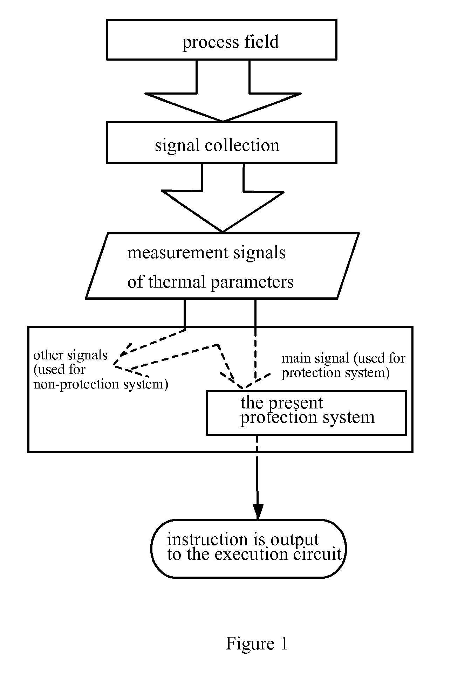

Figure 1 is a schematic diagram of a protection system in the prior art. This system firstly collects the thermal engineering parameter measurement signals from the process field, then uses a main signal as a protecting signal for a protection system and uses other signals for a non-protection system. However, when such a protection system is used in the actual operations, maloperations or refuse-operations of the protection system often occurs. In particular, in a modern large-sized unit (in particular supercritical and ultra-supercritical unit), the thermal control protection system has complicated functions and diversified subjects, and the interlock and protection functions of its main/auxiliary machines are very complicated and complete, which put very high demands on the thermal control work including the professional designing of the thermal control, the software configuration, and the installation, setting, operation and maintenance of the system. Meanwhile, the probability for the protection system to make mistakes in various steps from the generation of signals to the action execution also significantly increases, so that the case of maloperations or refuse-operations of the protection system is more inclined to occur. If the overall protection such as master fuel trip (MFT) of a unit often mal-operates, it has relatively limited influence on the unit with a small capacity. However, for a large-scale unit, in particular for a supercritical unit, maloperations will result in such problems as obvious oxide layer exfoliation from the steam-side of the pipe and the solid particles erosion (SPE) to turbine blades. In a less serious case, the internal efficiency of the turbine will be obviously reduced, and the heat consumption will be increased, such that the efficiency fails to meet the design requirements, while in a serious case, it will endanger the safety of a boiler and a regulating stage of a turbine or a first stage of the HP and IP cylinders. As for the ultra-supercritical unit, because its steam temperature is as high as 600°C, the steam oxidation problem in a boiler, main steam pipes and reheat steam pipes will be more serious than that in the past units of 540°C/566°C class.

Once a trip out occurs in a modern large-sized unit, such event will not only reduce the economic benefit of the power plant itself, but also result in many failures of equipments and further delay the recovery of the unit. In addition, such event will cause a significant impact on the power grids and bring about an undesirable social influence. Generally, the case of refuse-operations of the protection is not allowed to occur in consideration of the seriousness of its consequence, although such case rarely occurs in the thermal control protection system of the unit. Once a refuse-operation occurs, it will be very likely to cause serious damage to the equipments in the power plant and even to cause injury to human beings. Accordingly, it is necessary to absolutely avoid the case of refuse-operations of the protection.

As known from said description, the thermal control protection system is designed to guarantee the safety of equipments by means of a protection action. However, excessive maloperations of the protection will bring unfavorable influences on the safe and economical operation of the unit, with said MFT protection system as a typical representative. Therefore, it is necessary to eliminate refuse-operations and reduce maloperations of the thermal control protection system as far as possible.

### Summary of the Invention

In view of said deficiency of the prior art, the technical issue to be addressed by the present invention is to provide a thermal control protection system to further improve its intelligence and reliability in addition to the guaranteed reliability of the present protection system.

To achieve said technical object, the present invention provides a thermal control intelligent protection method for a generating unit as defined in claim 1.

As known from the thermal process of a power plant, a modern large-ssized unit is an object to be controlled, characterized by multiple parameters, multiple variables, a strong association, and multiple interferences, wherein any thermal parameter is not isolated but has an association with some other thermal parameters. For example, for the vacuum system, the vacuum degree of a condenser certainly has an association with the exhaust temperature of an LP cylinder and the extraction pressure at the last stage of a turbine. The decrease in the vacuum degree will certainly result in the increase in the exhaust temperature of the LP cylinder and the extraction pressure at the last stage of the turbine. For another example, for the water supply system, the outlet feed water flow of a boiler economizer certainly has an association with the total flow of the feed water, the outlet temperature of a water-cooled wall and the pressure difference of the inlet and outlet of the economizer. If the outlet feed water flow of the economizer is reduced significantly, the total flow of the boiler feed water will decrease accordingly, the outlet temperature of the water-cooled wall will quickly increase, and the pressure difference of the inlet and outlet of the economizer will be obviously reduced. These mutually associated thermal parameters have no problem to obtain the corresponding measurement signals in the present control system.

The working principle of utilizing evidence signals to verify if the main signal is true or false as mentioned in the protection system of the present invention is just based on above-mentioned common knowledge. A measurement signal of a thermal parameter that will trigger a protection action is defined as a "main signal", and the measurement signals of the associated thermal parameters used to verify if the "main signal" is true or false are defined as "evidence signals". A matching relation is established between the main signal and the evidence signals. The protection system of the present invention takes full advantage of "evidence signals" in the present control system to verify if the associated "main signal" is true or false , so as to further reduce the probability of maloperations or refuse-operations of the protection when firstly ensuring the reliability of the present protection system.

Compared with the present protection system, the protection system of the present invention adds an intelligent judgement module which mainly consists of a delay unit, an intelligent judgement unit and an instruction processing unit. The added intelligent judgement module is mainly designed to judge whether a protection instruction belongs to a maloperation according to the working principle of utilizing said evidence signals to verify if the main signal is true or false, or, whether there is a refuse-operation when receiving no protection instruction. In addition to completing the protection for the unit by utilizing the present protection system, the added intelligent judgement module can realize a further intelligent protection for the unit.

Furthermore, a man-machine dialog unit can also be added in the present invention, with a monitoring interface popping up to show the analysis on the reasons for each protection action and prompt a corresponding operation instruction, so as to overcome the passivity of the monitoring on the production process in the prior art.

When meeting the real-time requirements, the thermal control protection system, without affecting the reliability of the present protection system, the protection system of the present invention prolongs the operation life of the unit, improves the safety and economic benefit of the unit and enhance the stability of the power grids by significantly reducing the times of maloperations and refuse-operations of the protection.

The concept, the specific configuration and the resulted technological effects of the present invention will be further described hereinafter in conjunction with the attached drawings, in order to fully understand the object, features and effects of the present invention.

### Brief Description of the Drawings

Figure 1 is a functional block diagram of a protection system according to the prior art;
Figure 2 is a functional block diagram of a protection system according to the present invention;
Figure 3 is a work flow chart of an intelligent judgement unit as shown in Figure 2;
Figure 4 is a work flowchart of a signal identification unit as shown in Figure 2;
Figure 5 is a work flowchart of an instruction processing unit as shown in Figure 2.
Figure 6 is a functional block diagram of another embodiment of the protection system according to the present invention.

### Detailed Description of the Preferred Embodiments

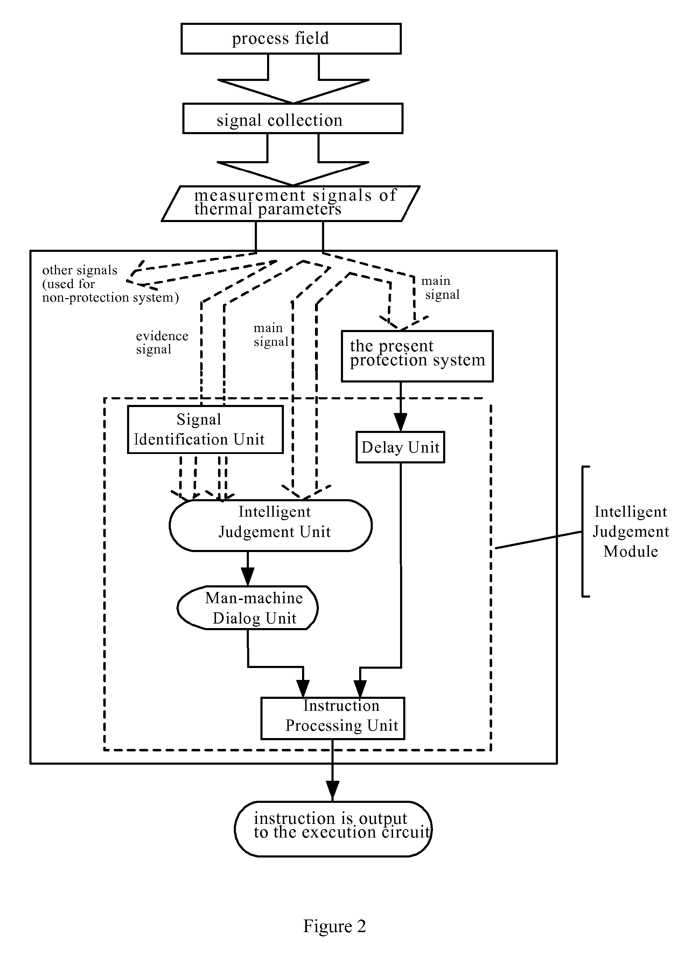

The first embodiment of the present invention is a vacuum intelligent protection system for a condenser. Figure 2 shows a functional block diagram of a protection system of the present invention.

The application of an intelligent protection system of the present invention in a vacuum intelligent protection system for a condenser comprises the following steps:

Step 1: according to the prior art, a vacuum degree of a vacuum system of a condenser has a strong association with the exhaust temperature of an LP cylinder and the extraction pressure at the last stage of a turbine. The decrease in the vacuum degree will certainly result in an increase in the exhaust temperature of the LP cylinder and the extraction pressure at the last stage of the turbine. In this embodiment, a signal of the vacuum measurement value is selected as a main signal, and the evidence signals are the exhaust temperature of the LP cylinder and the extraction pressure of at the last stage of the turbine respectively.

The signals of the present protection system are connected with an intelligent judgement module. The function of the intelligent judgement module is to judge if a protection instruction is a maloperation, a refuse-operation or a normal action according to said working principle of utilizing evidence signals to verify if the main signal is true or false. Said signal connection means that, the current technical measures are utilized to realize the transmission and flow of electric signals between this intelligent judgement module and the present protection system. Such signal connection includes conventional methods such as a wire connection and a wireless connection.

In this embodiment, this intelligent judgement module belongs to the present control system. This intelligent judgement module and the present protection system jointly constitute the thermal control intelligent protection system of this embodiment, including a delay unit, a signal identification unit, an intelligent judgement unit, a man-machine dialog unit and an instruction processing unit, etc.

In other embodiments of the present invention, the intelligent judgement module can also be totally independent to the present control system, as long as a smooth signal transmission can be maintained between it and the present protection system, and then the subsequent steps can be realized.

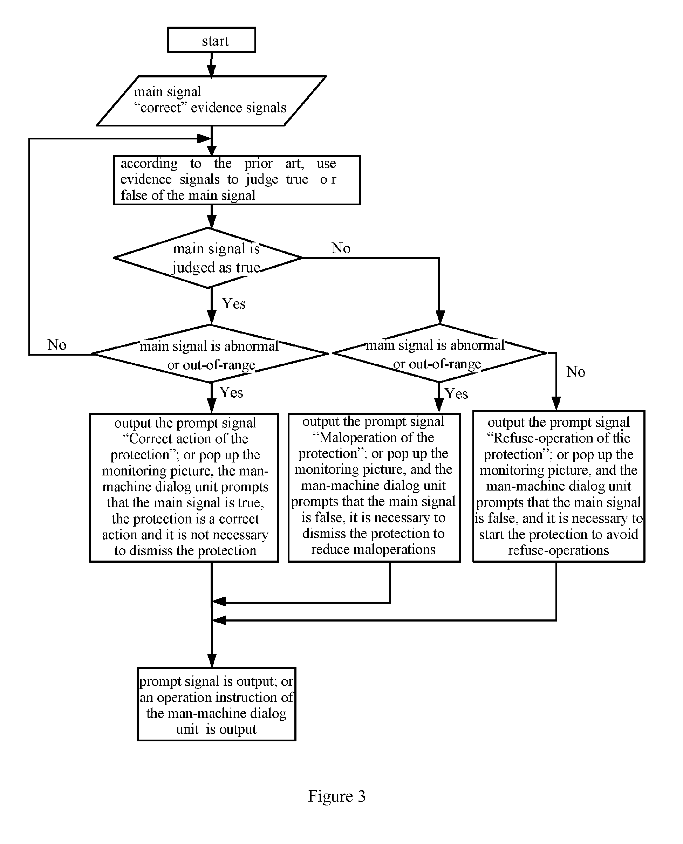

Step 2: the collected signal of the vacuum measurement value is sent to both the present protection system and said intelligent judgement unit, and two evidence signals, namely the LP cylinder exhaust temperature and the extraction pressure at the last stage of the turbine, are sent to the intelligent judgement unit. Figure 3 is a work flow chart of the intelligent judgement unit. To improve the reliability of evidence signals, two evidence signals, namely the LP cylinder exhaust temperature and the extraction pressure at the last stage of the turbine, come from different signal sources.

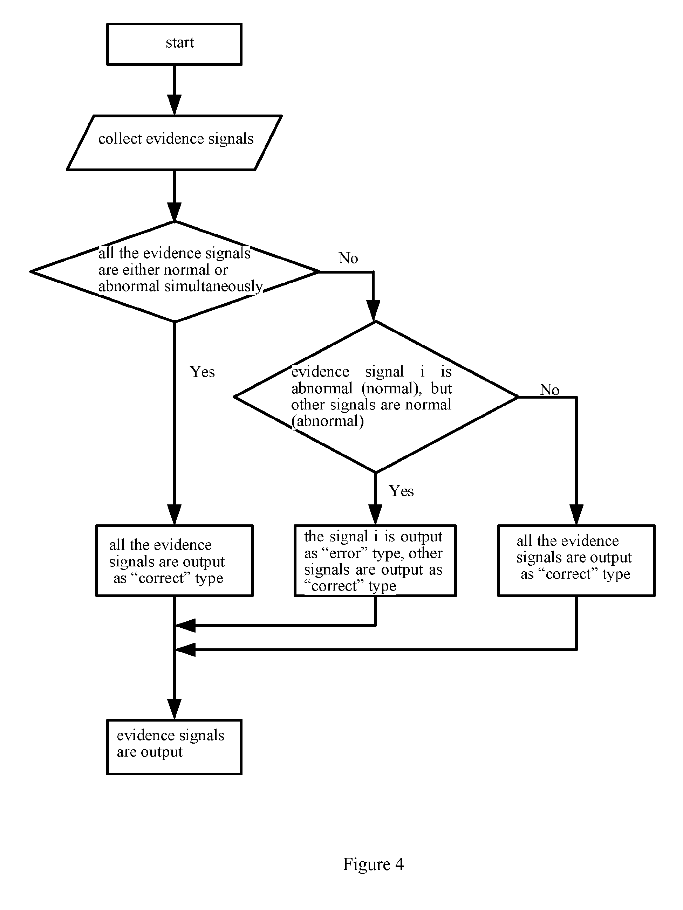

In this embodiment, two evidence signals collected by the protection system from different sources are firstly transmitted to a signal identification unit, which is designed to judge whether the collected evidence signals have an error. As shown in Figure 4, its preset rule is as follows: if an evidence signal i is judged as abnormal or out-of-range according to the prior art, and the other evidence signals are judged as normal according to the prior art, or vice versa, namely an evidence signal i is judged as normal according to the prior art, and the other evidence signals are judged as abnormal or out-of-range according to the prior art, the signal identification unit will identify that this evidence signal i has an error; otherwise, the signal identification unit will deem all the evidence signals as correct. The signal identification unit respectively sends the "correct" type and "error" type of evidence signals to the intelligent judgement unit. The intelligent judgement unit utilizes "correct" signals to verify a main signal, and for a signal with "error", the intelligent judgement unit prompts such signal to be inspected or replaced. In this embodiment, this signal identification unit judges whether the LP cylinder exhaust temperature and the extraction pressure of the last stage of the turbine has an error according to said preset rule, and then sends the correct signal/signals to the intelligent judgement unit; and for the error signal/signals, the intelligent judgement unit outputs error prompt with the "error" type to the man-machine dialog unit.

Step 3: when the present protection system does not send a protection instruction, this intelligent judgement unit utilizes said two evidence signals to verify if the main signal is true or false, namely the signal of the vacuum measurement value. If by this time the signal of the vacuum measurement value is output normally, while the LP cylinder exhaust temperature and the extraction pressure at the last stage of the turbine are displayed as abnormal or out-of-range, the intelligent judgement unit can, according to the working principle of utilizing the evidence signals to verify if the main signal is true or false, judge that by this time the main signal, namely the signal of the vacuum measurement value, is a false signal, and outputs a prompt signal "refuse-operation of the protection" to the man-machine dialog unit.

The function of the man-machine dialog unit is to display the procedures and results of the analysis and judgements as well as the prompts on the monitoring picture after the intelligent judgement unit has made analysis and judgement. In this embodiment, there are three kinds of output instructions of the man-machine dialog unit: "Commissioning protection", "Dismiss protection" and "Delay protection". The delay unit is displayed in the form of a countdown progress bar of a fault state.

After the man-machine dialog unit has received the prompt signal "refuse-operation of the protection" from the intelligent judgement unit, the monitoring interface pops up to provide an operation prompt, which is: "Although the vacuum of the condenser is normal, multiple parameters in the group of LP cylinder exhaust temperature and the extraction pressure at the last stage of the turbine have been displayed as abnormal; therefore, this vacuum value of the condenser is false, please pay close attention, and a protection action can be started!". After receiving the input operation instruction of "Commissioning protection", the man-machine dialog unit sends this instruction to the instruction processing unit, and the instruction processing unit sends the protection instruction corresponding to the main signal to the execution circuit according to the content of the main signal. The execution circuit executes the corresponding protection instruction, namely device tripping out, so that the protection system can overcome the refuse-operation, and the safety of the unit is guaranteed.

Since said execution circuit possessed by the present control system is a prior art which is well known to those skilled in this field, no detailed description is provided herein.

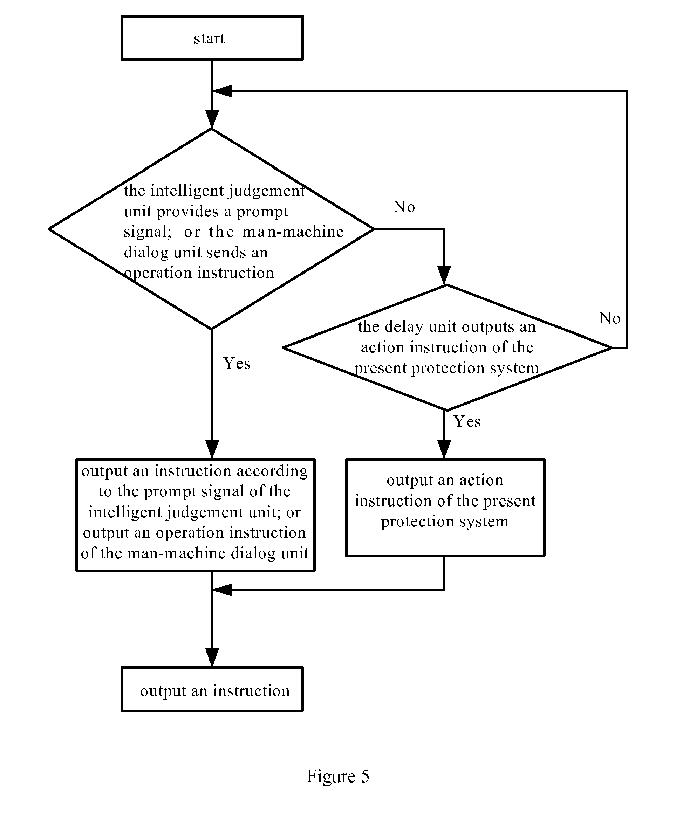

Referring to Figure 5, in the instruction processing unit, when the man-machine dialog unit selects one in the group of "Commissioning protection", "Releasing protection" and "Delay protection" and outputs a protection instruction, the device makes the corresponding direct action (or no-action) according to the instruction. The protection instruction as mentioned herein is a generalized concept including the device-action-type instructions and the device-no-action-type instructions. For example, in this embodiment, the device-action-type instructions include said "Commissioning protection" and "Delay protection", and the device-no-action-type instructions include said "Dismiss protection". According to the principle of giving priority to the sequence or the man-machine dialog, the instruction processing unit performs logical processing of the protection instructions from the man-machine dialog unit and the delay unit. When the man-machine dialog unit does not output a protection instruction, the instruction processing unit of the intelligent protection system outputs a protection instruction of the present protection system to the execution circuit.

Step 4: when the present protection system sends a protection instruction, the protection system firstly enters into the delay unit. The delay unit is designed to delay the output of the protection instruction. After the delay is ended, the present protection system sends the protection instruction to the instruction processing unit. When the main signal ,namely the signal of the vacuum measurement value, shows a low-low alarm but multiple evidence signals in the group of the LP cylinder exhaust temperature and the extraction pressure at the last stage of the turbine are not displayed as abnormal, the intelligent judgement unit can, according to the working principle of utilizing the evidence signals to verify if the main signal is true or false, judge that by this time the main signal , namely the signal of the vacuum measurement value, is a false signal, and outputs a prompt signal "maloperation of the protection" to the man-machine dialog unit. After the man-machine dialog unit has received the prompt signal "maloperation of the protection", the monitoring interface pops up to provide the operation prompt, which is: "The vacuum value of a condenser has shown a precaution, but several parameters of the LP cylinder exhaust temperature and the extraction pressure at the last stage of the turbine are all normal, therefore the vacuum value of the condenser is false, please pay close attention, and the protection can be dismissed!". If what is actually monitored by the man-machine dialog unit is the same as that described in the operation prompt content, a "Dismiss protection" can be selected to prevent a maloperation of the protection. If what is actually monitored by the man-machine dialog unit is not true, it is not allowed to dismiss the protection and "Commissioning protection" can be selected, so that a protection is activated immediately; or no-action is taken, so that a protection can be automatically activated after the delay is ended. By this time, it is possible to only miss one maloperation. If the man-machine dialog unit needs more adequate time for making a judgement, a "Delay protection" can be selected to increase the setting time of the delay unit (the total setting time should meet the requirements of the technical process). If the instruction processing unit has successively received an operation instruction from the man-machine dialog unit and a protection instruction of the present protection system from the delay unit, after making logical processing according to the principle of giving priority to the sequence, the corresponding protection instruction is output to the execution circuit; if the instruction processing unit has received an operation instruction from the man-machine dialog unit and a protection instruction of the present protection system from the delay unit at the same time, after making logical processing according to the principle of giving priority to the man-machine dialog, the corresponding protection instruction is output to the execution circuit, and the execution circuit executes the corresponding protection instruction. In this embodiment, by this time the main signal is a false signal, thus the device has no action, i.e., no trip out will happen, so that the maloperation is overcome.

If the main signal ,namely the signal of the vacuum measurement value, shows a low-low alarm, while the LP cylinder exhaust temperature and the extraction pressure at the last stage of the turbine are also displayed as abnormal, the intelligent judgement unit can, according to the working principle of utilizing the evidence signals to verify if the main signal is true or false, judge that by this time the main signal, namely the signal of the vacuum measurement value, is a true signal, and outputs the prompt signal "protection action correct" to the man-machine dialog unit. After the man-machine dialog unit has received the prompt signal "action correct" output from the intelligent judgement unit, a monitoring interface pops up to give the operation prompt which is: "The vacuum of a condenser has shown an early warning, and at the same time several parameters of the LP cylinder exhaust temperature and the extraction pressure at the last stage of the turbine are also abnormal, therefore, the vacuum value of the condenser is true, please pay close attention, and the protection can be dismissed! ". If what is actually monitored by the man-machine dialog unit is the same as that described in the operation prompt, "Commissioning protection" can be selected. If the instruction processing unit has subsequently received an operation instruction from the man-machine dialog unit and a protection instruction of the present protection system from the delay unit, after making logical processing according to the principle of giving priority to the sequence, the corresponding protection instruction is output to the execution circuit. If the instruction processing unit has received an operation instruction from the man-machine dialog unit and a protection instruction of the present protection system from the delay unit at the same time, after making logical processing according to the principle of giving priority to the man-machine dialog unit, a corresponding protection instruction is output to the execution circuit, and the execution circuit executes the corresponding protection instruction. In this embodiment, by this time the main signal is a true signal, thus the device will act normally, and the device will trip out.

By said steps, the intelligent protection system of the invention can reduce maloperations of the protection system and the probability of refuse-operations, without affecting the reliability of the present protection system. Therefore, the intelligent protection system of the present invention can improve the intelligence of the present protection system, without reducing its original reliability.

In the other embodiments of the present invention, in the second step, it is also feasible to merely send the collected signal of the vacuum measurement value to the present protection system, so that the intelligent judgement unit can read such signal when needed. Said implementation method does not affect the effect of implementing the present invention.

In step 2, the evidence signals are not limited to the multiple signals transmitted from different signal sources, which can be selected according to physical circumstances. Preferably, it is advisable to select the signals from different signal sources, which have a strong association with the main signal but high independence in a measurement, as the evidence signals to improve the independence and accuracy of signals.

The second embodiment of the present invention is a water-break intelligent protection system of a boiler. For the water-break protection system of the boiler, the outlet feed water flow of an economizer is generally used as a main signal. As can be known based on the general knowledge of the prior art, the outlet feed water flow of the boiler economizer certainly has a strong association with the total flow of the boiler feed water, the outlet temperature of a water-cooled wall and the pressure difference of the inlet and outlet of the economizer. If the outlet feed water flow of the economizer is reduced significantly, the total flow of boiler feed water will decrease accordingly, the outlet temperature of the water-cooled wall will quickly increase, and the pressure difference of the inlet and outlet of the economizer will be obviously reduced. However, in the conventional boiler water-break protection of the boiler, whether it is necessary to make the boiler trip out is directly determined according to the outlet feed water flow of the boiler economizer.

The steps in this embodiment are almost identical to those in the first embodiment. The difference lies in the fact that, in this embodiment, the main signal is the outlet feed water flow of the economizer, and the evidence signals are the measurement signals of the total flow of boiler feed water, the outlet temperature of the water-cooled wall and the inlet and outlet pressure difference of the economizer in the present control system.

Concretely, the water-break intelligent protection system of a boiler comprises:
Step 1: set a matching relation of a main signal and evidence signals between the measurement signals of different thermal protection parameters and the measurement signals of other associated thermal parameters in the present control system. In this embodiment, the main signal is a signal of the outlet feed water flow of an economizer, and the evidence signals are measurement signals of the total flow of the boiler feed water, the outlet temperature of a water-cooled wall and the pressure difference of the inlet and outlet of the economizer in the present control system.
Step 2: The present control system sends the collected signal of the outlet feed water flow of the economizer to the present protection system, and sends the collected measurement signals of the total flow of the boiler feed water, the outlet temperature of the water-cooled wall and the pressure difference of the inlet and outlet of the economizer to the signal identification unit. The signal identification unit can, according to the same preset rule as that in the first embodiment, judge whether the measurement signals of the total flow of the boiler feed water, the outlet temperature of the water-cooled wall and the pressure difference of inlet and outlet of the economizer has an error, and send the correct signals to the intelligent judgement unit; and for the error signals, the intelligent judgement unit outputs an error prompt with the "error" type to the man-machine dialog unit.
Step 3: When the present protection system does not send a protection instruction, the intelligent judgement unit reads the correct signals from the signal identification unit, and utilizes three evidence signals, namely the measurement signals of the total flow of the boiler feed water, the outlet temperature of the water-cooled wall and the pressure difference of the inlet and outlet of the economizer, to verify if the main signal is true or false, namely the signal of the outlet feed water flow of the economizer. If by this time the main signal, namely the signal of the outlet feed water flow of economizer, is not out-of-range, while the measurement signals of the total flow of the boiler feed water, the outlet temperature of the water-cooled wall and the pressure difference of the inlet and outlet of the economizer are displayed as abnormal or out-of-range, the intelligent judgement unit can, according to the working principle of utilizing the evidence signals to verify if the main signal is true or false, judge that by this time the main signal, namely the signal of the outlet feed water flow of the economizer, is a false signal, then the intelligent judgement unit outputs the operation prompt "refuse-operation of the protection" to the man-machine dialog unit. The man-machine dialog unit pops up a monitoring interface to provide an operation prompt, which is: "Although the outlet feed water flow of the economizer is normal, the total flow of the boiler feed water is too low, the pressure difference of the inlet and outlet of the economizer is abnormal, and the increasing rate of the outlet temperature of the water-cooled wall is significant, therefore, by this time, the measurement value of the feed water flow is false, the actual value of the feed water flow is too low, and a trip out is needed". The man-machine dialog unit accepts the input operation instruction according to the actually observed situation, the instruction processing unit outputs an operation instruction from the man-machine dialog unit to the execution circuit, and the execution circuit executes a corresponding protection instruction. Since the system refuses to act by this time, the action instruction from the instruction processing unit enables the device to trip out and thus overcomes the refuse-operation.
Step 4: when the present protection system sends a protection instruction, the protection system firstly enters into the delay unit. If the main signal, namely the signal of the outlet feed water flow of the economizer, shows a low-flow alarm, while the measurement signals of the total flow of the boiler feed water, the outlet temperature of the water-cooled wall and the pressure difference of the inlet and outlet of the economizer are not displayed as abnormal, the intelligent judgement unit can, according to the working principle of utilizing the evidence signals to verify if the main signal is true or false, judge that by this time the main signal, namely the signal of the outlet feed water flow of the economizer, as a false signal. The intelligent judgement unit outputs the prompt signal "maloperation of the protection" to the man-machine dialog unit, and the man-machine dialog unit pops up a monitoring interface to provide the operation prompt, which is: "Low outlet feed water flow of the economizer has shown early warning, while other parameters such as the total flow of the boiler feed water, the outlet temperature of the water-cooled wall and the pressure difference of the inlet and outlet of the economizer are normal, therefore, by this time the low feed water flow is false, please pay close attention and the protection action need to be dismissed!". After receiving the input operation instruction, the man-machine dialog unit outputs the input operation instruction to the instruction processing unit. If the instruction processing unit has subsequently received the operation instruction from the man-machine dialog unit and a protection instruction of the present protection system from the delay unit, after making logical processing according to the principle of giving priority to the sequence, the corresponding protection instruction is output to the execution circuit. If the instruction processing unit has received the operation instruction from the man-machine dialog unit and a protection instruction of the present protection system form the delay unit at the same time, after making logical processing according to the principle of giving priority to the man-machine dialog unit, the corresponding protection instruction is output to the execution circuit, and the execution circuit executes the corresponding protection instruction. In this embodiment, by this time the main signal is a false signal, thus the device will not act, namely the device will not trip out, so that the maloperation is overcome.

If the main signal, namely the signal of the outlet feed water flow of the boiler economizer, shows a low-flow alarm, while the measurement signals of the total flow of the boiler feed water, the outlet temperature of the water-cooled wall and the pressure difference of the inlet and outlet of the boiler economizer are all displayed as abnormal, the intelligent judgement unit can, according to the working principle of utilizing the evidence signals to verify if the main signal is true or false, judge that by this time the main signal, namely the signal of the outlet feed water flow of the boiler economizer as a true signal. The intelligent judgement unit outputs the prompt signal "correct protection action" to the man-machine dialog unit, which pops up a monitoring interface to provide the operation prompt which is: "The outlet feed water flow of the economizer has shown an early warning, while the other parameters such as the total flow of the boiler feed water, the outlet temperature of a water-cooled wall and the pressure difference of the inlet and outlet of the economizer are also displayed as abnormal, therefore, by this time the low feed water flow is true, please pay close attention and a protection action need to be started!". After receiving the input operation instruction, the man-machine dialog unit outputs it to the instruction processing unit. If the instruction processing unit has subsequently received the operation instruction from the man-machine dialog unit and a protection instruction of the present protection system from the delay unit, after making logical processing according to the principle of giving priority to the sequence, the corresponding protection instruction is output to the execution circuit. If the instruction processing unit has received the operation instruction from the man-machine dialog unit and a protection instruction of the present protection system from the delay unit at the same time, after making logical processing according to the principle of giving priority to the man-machine dialog unit, the corresponding protection instruction is output to the execution circuit, and the execution circuit executes the corresponding protection instruction. Here, since the output of the system actually is an instruction of a correct action, the device will execute the protection instruction of the present protection system and act normally.

The water-break intelligent protection system of a boiler in the present invention utilizes the measurement signals of the total flow of the boiler feed water, the outlet temperature of the water-cooled wall and the pressure difference of the inlet and outlet of the economizer to judge if the signal of the outlet feed water flow of the economizer is true or false, and then judges if the protection is a maloperation, a refuse-operation or a normal action, so as to reduce the probability of refuse-operations of the present protection system as well as the times of maloperations, and at the same time guarantees the reliability of the present protection system.

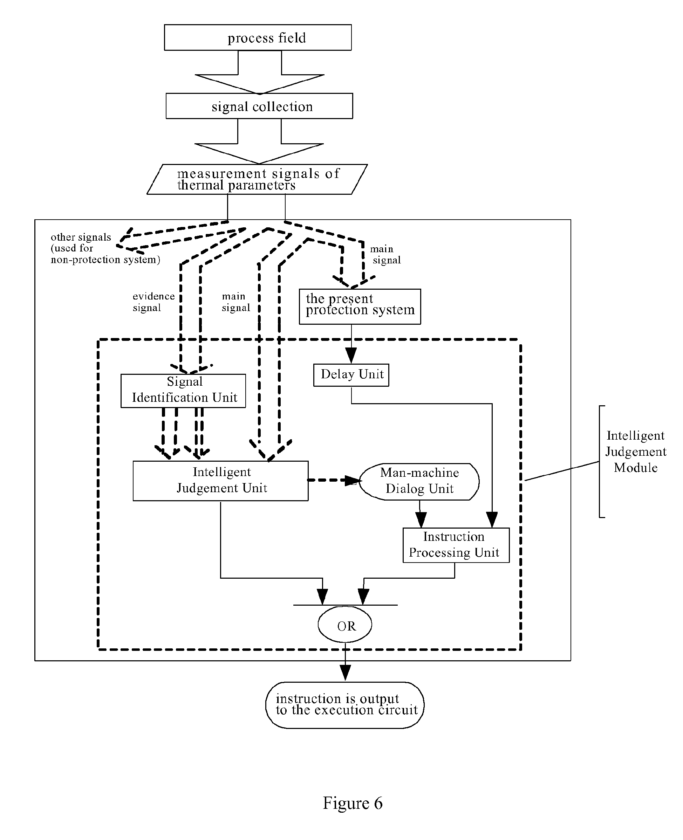

As shown in figure 6, in other embodiments of the present invention, a "logical or" unit is also set at one end of the intelligent judgement module closest to the execution circuit. By this time, the intelligent judgement unit can have one protection instruction output that is directly sent to the "logical or" unit. The "logical or" unit can at the same time receive a protection instruction output from the instruction processing unit, and, after making "logical or" processing for said two protection instructions output, send these protection instructions to the execution circuit. The advantage of such design is that, the intelligence of protection system can be further improved without reducing the reliability of the protection system of the present invention.

The intelligent protection system of the present invention can also be applied in other protection fields of the thermal generating unit, and thus has a wide prospect in application.
In summary, only several preferred embodiments of the present invention are described in the description. According to the concept of the present invention, any technical solution that can be conceived by those skilled in the art by way of the logical analysis, reasoning or limited experiments on the basis of the prior art shall fall into the scope of the claims of the present invention

## Claims

1. A thermal control intelligent protection method for a generating unit, **characterized by** the following steps:
Step 1: selecting one of a plurality of measurement signals of thermal parameters in a present control system as a main signal and selecting other measurement signals of thermal parameters associated with the thermal parameter of the main signal as evidence signals; connecting signals of a present protection system in said present control system to an intelligent judgement module; said intelligent judgement module at least comprises a delay unit, an intelligent judgement unit and an instruction processing unit;
Step 2: simultaneously sending said main signal to the present protection system of said present control system and said intelligent judgement unit; sending said evidence signals to said intelligent judgement unit;
Step 3: when said present protection system does not send a protection instruction, said intelligent judgement unit utilizes the evidence signals to verify if said main signal is true or false; if said main signal is verified as false, said intelligent judgement unit outputs a prompt signal "refuse-operation of the protection" to said instruction processing unit; after receiving said prompt signal "refuse-operation of the protection", said instruction processing unit, according to a content of said main signal, outputs said protection instruction corresponding to said main signal to an execution circuit;
Step 4: when said present protection system sends said protection instruction according to said main signal, said protection instruction firstly enters into a delay unit, and said delay unit is designed to delay an output of said protection instruction; after a delay is ended, a protection instruction is sent to said instruction processing unit;
at the same time with the main signal being processed by the present protection system through the delay unit,said intelligent judgement unit utilizes said evidence signals to verify if said main signal is true or false;
if said main signal is verified as false, said intelligent judgement unit outputs a prompt signal "maloperation of the protection" to said instruction processing unit, and at the same time an output of said protection instruction received by said instruction processing unit from said present protection system is terminated;
if said main signal is verified as true, said intelligent judgement unit outputs a prompt signal "correct protection action" to said instruction processing unit; said instruction processing unit outputs said protection instruction from said present protection system to the execution circuit.

2. The thermal control intelligent protection method of Claim 1, **characterized in that**:
in said step 2, said main signal as collected is sent to said present protection system, and said evidence signals as collected are sent to said intelligent judgement unit; in said steps 3 and 4, said intelligent judgement unit firstly reads, from said present protection system, said main signal collected.

## Patentansprüche

1. Intelligentes Thermosteuerungs-Schutzverfahren für eine Erzeugungseinheit, **gekennzeichnet durch** die folgenden Schritte:
Schritt 1: Auswählen von einem von mehreren Messsignalen thermischer Parameter in einem vorhandenen Steuerungssystem als Hauptsignal und Auswählen anderer Messsignale von thermischen Parametern, die mit den thermischen Parametern des Hauptsignals als Nachweissignale; Verbinden von Signalen eines vorhandenen Schutzsystems im vorhandenen Steuerungssystem mit einem intelligenten Beurteilungsmodul; wobei das intelligente Beurteilungsmodul mindestens eine Verzögerungseinheit, eine intelligente Beurteilungseinheit und eine Befehlsverarbeitungseinheit umfasst;
Schritt 2: gleichzeitiges Senden des Hauptsignals an das vorhandene Schutzsystem des vorhandenen Steuerungssystems und die intelligente Beurteilungseinheit; Senden von Nachweissignalen an die intelligente Beurteilungseinheit;
Schritt 3: Wenn das vorhandene Schutzsystem keinen Schutzbefehl sendet, nutzt die intelligente Beurteilungseinheit die Nachweissignale, um zu überprüfen, ob das Hauptsignal wahr oder falsch ist; wenn das Hauptsignal als falsch überprüft wird, gibt die intelligente Beurteilungseinheit ein Aufforderungssignal "Schutzoperation verweigern" an die Befehlsverarbeitungseinheit aus; nach dem Empfang des Aufforderungssignals "Schutzoperation verweigern" gibt die Befehlsverarbeitungseinheit gemäß einem Inhalt des Hauptsignals den Schutzbefehl, der dem Hauptsignal entspricht, an eine Ausführungsschaltung aus;
Schritt 4: Wenn das vorhandene Schutzsystem den Schutzbefehl gemäß dem Hauptsignal sendet, tritt der Schutzbefehl zuerst in eine Verzögerungseinheit ein, und die Verzögerungseinheit ist dafür ausgelegt, eine Ausgabe des Schutzbefehls zu verzögern; nachdem eine Verzögerung beendet ist, wird ein Schutzbefehl an die Befehlsverarbeitungseinheit gesendet;
gleichzeitig mit dem Hauptsignal, das **durch** das vorhandene Schutzsystem **durch** die Verzögerungseinheit verarbeitet wird, nutzt die intelligente Beurteilungseinheit die Nachweissignale zum Überprüfen, ob das Hauptsignal wahr oder falsch ist;
wenn das Hauptsignal als falsch nachgewiesen wird, gibt die intelligente Beurteilungseinheit ein umgehendes Signal "Fehlfunktion des Schutzes" an die Befehlsverarbeitungseinheit aus, und gleichzeitig wird eine Ausgabe des Schutzbefehls, der **durch** die Befehlsverarbeitungseinheit vom vorhandenen Schutzsystem empfangen wird, beendet;
wenn das Hauptsignal als wahr nachgewiesen wird, gibt die intelligente Beurteilungseinheit ein umgehendes Signal "korrekte Schutzaktion" an die Befehlsverarbeitungseinheit aus; die Befehlsverarbeitungseinheit gibt den Schutzbefehl aus dem vorhandenen Schutzsystem an die Ausführungsschaltung aus.

2. Intelligentes Thermosteuerungs-Schutzverfahren nach Anspruch 1, **dadurch gekennzeichnet, dass**: in Schritt 2 das Hauptsignal, wie erfasst, an das vorhandene Schutzsystem gesandt wird, und die Nachweissignale, wie erfasst, werden an die intelligente Beurteilungseinheit gesandt; in den Schritten 3 und 4 liest die intelligente Beurteilungseinheit zuerst aus dem vorhandenen Schutzsystem das erfasste Hauptsignal.

## Revendications

1. Procédé de protection intelligente de commande thermique pour une unité de génération, **caractérisé par** les étapes suivantes :
Etape 1 : sélectionner un signal parmi une pluralité de signaux de mesure de paramètres thermiques dans un système de commande actuel en tant que signal principal, et sélectionner d'autres signaux de mesure de paramètres thermiques associés au paramètre thermique du signal principal comme des signaux de preuve, connecter des signaux d'un système de protection actuel dans ledit système de commande actuel à un module d'évaluation intelligent, ledit module d'évaluation intelligent comprend au moins une unité de retard, une unité d'évaluation intelligente et une unité de traitement d'instruction,
Etape 2 : envoyer simultanément ledit signal principal au système de protection actuel dudit système de commande actuel et à ladite unité d'évaluation intelligente, envoyer lesdits signaux de preuve à ladite unité d'évaluation intelligente,
Etape 3 : lorsque ledit système de protection actuel n'envoie pas une instruction de protection, ladite unité d'évaluation intelligente utilise les signaux de preuve pour vérifier si ledit signal principal est vrai ou faux, si ledit signal principal est vérifié comme étant faux, ladite unité d'évaluation intelligente fournit en sortie un signal de guidage « refuser fonctionnement de la protection » à ladite unité de traitement d'instruction, après la réception dudit signal de guidage « refuser fonctionnement de la protection », ladite unité de traitement d'instruction, en fonction d'un contenu dudit signal principal, fournit en sortie l'instruction de protection correspondant audit signal principal à un circuit d'exécution,
Etape 4 : lorsque ledit système de protection actuel envoie ladite instruction de protection en fonction dudit signal principal, ladite instruction de protection entre d'abord dans une unité de retard, et ladite unité de retard est conçue pour retarder une sortie de ladite instruction de protection, après la fin d'un retard, une instruction de protection est envoyée à ladite unité de traitement d'instruction,
en même temps que le signal principal est traité par le système de protection actuel par le biais de l'unité de retard, ladite unité d'évaluation intelligente utilise lesdits signaux de preuve pour vérifier si ledit signal principal est vrai ou faux,
si ledit signal principal est vérifié comme étant faux, ladite unité d'évaluation intelligente fournit en sortie un signal de guidage « dysfonctionnement de la protection » à ladite unité de traitement d'instruction, et en même temps il est mis fin à une sortie de ladite instruction de protection reçue par ladite unité de traitement d'instruction provenant dudit système de protection actuel,
si ledit signal principal est vérifié comme étant vrai, ladite unité d'évaluation intelligente fournit en sortie un signal de guidage « action de protection correcte » à ladite unité de traitement d'instruction, ladite unité de traitement d'instruction fournit en sortie ladite instruction de protection en provenance système de protection actuel vers le circuit d'exécution.

2. Procédé de protection intelligente de commande thermique selon la revendication 1, **caractérisé en ce que** :
à l'étape 2, ledit signal principal tel que collecté est envoyé audit système de protection actuel, et lesdits signaux de preuve tels que collectés sont envoyés à ladite unité d'évaluation intelligente, aux étapes 3 et 4, ladite unité d'évaluation intelligente lit tout d'abord, à partir dudit système de protection actuel, ledit signal principal collecté.
